# EUROPÄISCHE PATENTSCHRIFT

(11) **EP 1 870 954 B1**
(45) Veröffentlichungstag und Bekanntmachung des Hinweises auf die Patenterteilung: **29.07.2009**
(21) Anmeldenummer: 07008043.7
(22) Anmeldetag: 20.04.2007
(51) Int. Cl.: H01M 10/48

(54) **Ladezustandsanzeiger**
Charge level display
Indicateur d'état de charge

(30) Priorität: 27.05.2006 DE 102006024798
(43) Veröffentlichungstag der Anmeldung: 26.12.2007
(73) Patentinhaber: VB Autobatterie GmbH & Co. KGaA, 30419 Hannover (DE)
(72) Erfinder: Streuer, Peter, 30559 Hannover (DE)
(74) Vertreter: Gerstein, Hans Joachim

(56) Entgegenhaltungen:
- EP-A- 0 299 670
- DE-C1- 10 224 662
- US-A- 4 455 524
- US-A- 6 121 755

## Beschreibung

Die Erfindung betrifft einen Ladezustandsanzeiger für einen mit einem flüssigen Elektrolyten ausgestatteten Akkumulator, mit einem transparenten Sichtstab, der an einem ersten Ende eine Beobachtungsfläche und an einem zweiten Ende eine durch eine konische Reflektionsfläche gebildete Spitze hat, und mit einem am zweiten Ende des Sichtstabes angebrachten, vom Elektrolyt durchströmbaren Kugelkäfig mit stirnseitigen und unteren Begrenzungen sowie mit einer mit einem Durchbruch für das zweite Ende des Sichtstabes versehenen Begrenzungswand, und mit mindestens einem sich schräg zur Längsachse des Sichtstabes in Richtung der oberen Begrenzungswand erstreckenden Kugelführungskanal mit oberen und unteren Kanalbegrenzungswänden und seitlichen Begrenzungen für wenigstens eine Kugel, die ein definiertes spezifisches Gewicht hat.

Ladezustandsanzeiger werden dazu genutzt, um auf einfache Weise an der Beobachtungsfläche des transparenten Sichtstabes ablesbar den Ladezustand des Akkumulators, wie beispielsweise eines Bleiakkumulators, anzuzeigen. Dabei wird die Tatsache ausgenutzt, dass sich das spezifische Gewicht des Elektrolyten in Abhängigkeit von dem Ladezustand ändert.

In dem Kugelführungskanal wird mindestens eine Kugel mit einem spezifischen Gewicht geführt, das auf das spezifische Gewicht des Elektrolyten bei vorgegebenem Ladezustand abgestimmt ist. Bei einer ordnungsgemäßen Ladung der Batterie ist die Kugel leichter als das Elektrolyt und schwimmt in dem schrägen Kugelführungskanal auf. Bei Entladung des Akkumulators fällt das spezifische Gewicht des Elektrolyten ab und ist niedriger als das spezifische Gewicht der Kugel, so dass die Kugel in dem Kugelführungskanal nach unten absinkt.

DE 25 11 426 C2 offenbart einen Ladezustandsanzeiger mit schrägem Kugelführungskanal, der an der Spitze des Sichtstabes endet. Bei ausreichender Ladung des Akkumulators schwimmt die Kugel auf und wird am Ende des Sichtstabes durch die Beobachtungsfläche am ersten Ende sichtbar. Durch eine farbige Ausbildung der Kugel lässt sich so eine farbige Anzeige für den ordnungsgemäßen Ladezustand realisieren. Durch die Reflektionsfläche am zweiten Ende des Sichtstabes wird ferner ein ausreichender Füllgrad des Akkumulators mit dem Elektrolyten sichtbar. Für den Fall, dass der Elektrolytstand soweit abgesunken ist, dass die Spitze des Sichtstabes nicht mehr in den Elektrolyten eintaucht, bilden die konischen Flächen der Spitze des Sichtstabes eine Grenzfläche mit Luft. An den konischen Flächen der Spitze des Sichtstabes tritt dann eine Totalreflektion ein, so dass die Spitze als reflektierende Fläche, also hell, erscheint. Bei ausreichendem Füllstand des Elektrolyts und Auswahl des Materials des Sichtstabes so, dass die Brechungskoeffizienten des Sichtstabes und des Elektrolyten etwa gleich sind, entsteht keine Totalreflektion mehr. Damit besteht eine optische Verbindung über die Spitze des Sichtstabes mit dem dunklen Innenraum des Akkumulators, so dass an der Beobachtungsfläche eine dunkle Fläche erscheint.

EP 1 120 641 A2 und DE 102 24 662 C1 offenbaren einen Ladezustandsanzeiger, der eingangs erwähnten Art mit einem über die Höhe der Spitze des Sichtstabes hinaus in Richtung der oberen Begrenzungswand des Kugelkäfigs verlaufendem Kugelführungskanal. Von dem Kugelführungskanal werden zwei Kugeln mit unterschiedlichem spezifischem Gewicht aufgenommen, die unterschiedliche Farben haben. Im entladenen Zustand des Akkumulators befinden sich beide Kugeln am unteren Ende des Kugelführungskanals, wodurch die obere Kugel unter der Spitze des Sichtstabes zum Liegen kommt. Wenn ausreichend Elektrolyt vorhanden ist, wird an der Beobachtungsfläche des Sichtstabes die Farbe der oberen Kugel, z.B. rot, erkennbar. Damit wird angezeigt, dass der Akkumulator entladen ist. In einem mittleren Ladezustand schwimmt die obere Kugel mit geringerem spezifischem Gewicht als die untere Kugel auf und verschwindet aus dem Sichtfeld der Spitze des Sichtstabes an das obere Ende des Kugelführungskanals während die untere Kugel aufgrund ihres früheren spezifischen Gewichts noch nicht im Kugelführungskanal nach oben aufschwimmt. Die untere Kugel verbleibt vielmehr am unteren Ende des Kugelführungskanals außerhalb des Sichtbereichs des Sichtstabes. Bei ausreichendem Elektrolytstand wird nun die Farbe des Gehäuses an der Beobachtungsfläche sichtbar. Bei gutem Ladezustand schwimmt auch die untere Kugel auf und stößt gegen die obere, bereits aufgeschwommene Kugel, wodurch sie unterhalb der Spitze des Sichtstabes positioniert wird. An der Beobachtungsfläche ist die Farbe der unteren Kugel, z.B. grün, als Signal für einen guten Ladezustand sichtbar.

Bei den herkömmlichen Ladezustandsanzeigern besteht das Problem, dass Gasblasen im Bereich der Spitze des Sichtstabes gefangen werden und nicht abgeführt werden können. Bei Ladezustandanzeigen mit einer Kugel kann es vorkommen, dass eine Gasblase vor der Spitze des Sichtstabes gefangen bleibt und die Kugel am Aufsteigen vor die Spitze des Sichtstabes hindert. Bei Ladezustansanzeigen mit zwei Kugeln kann die obere Kugel an der Spitze hängen bleiben und am weiteren Aufsteigen über die Spitze hinaus in Richtung oberer Begrenzungswand gehindert werden. Dies führt zu einer Fehlanzeige bei eigentlich funktionsfähigen Akkumulatoren.

Aufgabe der Erfindung ist es daher, den Ladezustandsanzeiger der eingangs genannten Art so zu verbessern, dass Gasblasen besser an der Spitze abgeführt werden.

Die Aufgabe wird mit dem Ladezustandsanzeiger der eingangs genannten Art dadurch gelöst, dass der Kugelkäfig einen zwischen der vom unteren Bereich des Kugelkäfigs zur Spitze verlaufenden ersten oberen Kanalbegrenzungswand des Kugelführungskanals und der Spitze beginnenden Gasblasensammelkanal hat, der sich mindestens von der Spitze entgegensetzt zum angrenzenden Kugelführungskanal schräg nach oben zur oberen Begrenzungswand erstreckt und im oberen Bereich des Gasblasensammelkanals ausgehend von einer mit der Spitze fluchtenden Zentralebene zu den Außenseiten des Kugelkäfigs in Richtung des oberen Bereichs des Kugelkäfigs zulaufende Gasableitflächen hat.

Im Unterschied zu den herkömmlichen Ladezustandsanzeigern wird somit der Raum zwischen konischer Reflektionsfläche der Spitze in Richtung des vorderen Bereichs des Kugelkäfigs geöffnet und ein Gasblasensammelkanal geschaffen, durch den Gasblasen von der Spitze in den oberen Bereich des Kugelkäfigs abgeführt werden können. Dabei ist entscheidend, dass die obere Begrenzungswand des Kugelkäfigs, die die obere Begrenzungswand des Gasblasensammelkanals bildet, von der mittleren Ebene des Kugelkäfigs zu den Außenseiten nach oben zulaufen. Hierzu können Schrägen oder (relativ große) Radien zur Außenseite des Kugelkäfigs an der höchsten Stelle des Innenraums des Kugelkäfigs angeordnet sein, die die Gasblasen ableiten.

Es hat sich gezeigt, dass durch diese einfache Maßnahme das Fangen von Gasblasen im Bereich der Spitze des Sichtstabes verhindert werden kann.

Wie bereits erwähnt, können die zulaufenden Gasableitflächen radial oder schräg nach außen von der Zentralebene zu den Außenseiten des Kugelkäfigs verlaufen.

Besonders vorteilhaft ist es, wenn die Gasableitflächen eine aufgeraute Oberfläche haben. Dies führt zu besseren Benetzbarkeit der Gasableitflächen und zu seiner Verhinderung des Anhaftens von Gasblasen an den Gasableitflächen.

In einer besonderen Ausführungsform geht die an der Zentralebene in Richtung untere Begrenzung zulaufende obere Begrenzungswand des Gassammelkanals in eine sich senkrechte in Richtung unterer Begrenzung erstreckende Stützwand über. Die Stützwand hat eine zur Spitze weisende Schmalseite, so dass durch die zur Stabilisierung vorgesehene Stützwand keine wesentliche Behinderung von aufsteigenden Gasblasen bewirkt wird.

Die Stützwand kann beispielsweise an der ersten oberen Kanalbegrenzungswand des Kugelführungskanals enden und integral mit dieser ersten oberen Kanalbegrenzungswand verbunden sein.

Weiterhin ist es vorteilhaft, wenn die sich von der Spitze in Richtung der oberen Begrenzungswand schräg nach oben erstreckende zweite obere Kanalbegrenzungswand des Kugelführungskanals mit einem freien Zwischenraum an die konische Reflektionsfläche der Spitze angrenzt. D.h., dass der. Neigungswinkel der konischen Reflektionsfläche in Bezug auf die Längsachse des Sichtstabes kleiner als der Neigungswinkel des Kugelführungskanals in Bezug auf die Längsachse des Sichtstabes ist. Hierdurch wird im Vergleich zu den herkömmlichen Ladezustandsanzeigern der Freiraum um die Spitze erheblich vergrößert, so dass dieser Bereich der Spitze des Sichtstabes besser mit Elektrolyt umflutet werden kann. Dies führt dazu, dass die Möglichkeit des Hängenbleibens von Gasblasen weiter verringert wird. Der freie Zwischenraum zwischen zweiter oberer Kanalbegrenzungswand und Reflektionsfläche der Spitze wird dadurch erreicht, dass im Vergleich zu den herkömmlichen Ladezustandsanzeigern die Höhe der zweiten oberen Kanalbegrenzungswand verringert ist.

Die Erfindung wird nachfolgend anhand von Ausführungsbeispielen mit den beigefügten Zeichnungen näher erläutert: Es zeigen:
- Figur 1 -: Vorderansicht einer ersten Ausführungsform des Ladezustandsanzeigers;
- Figur 2 -: Schnittansicht der Stirnseite des Ladezustandsanzeigers aus Figur 1;
- Figur 3 -: Rückansicht des Ladezustandsanzeigers aus Figur 1;
- Figur 4 -: Schnittansicht B-B des Ladezustandsanzeigers aus Figur 1 von oben;
- Figur 5 -: Vorderansicht einer zweiten Ausführungsform des Ladezustandsanzeigers;
- Figur 6 -: Schnittansicht A-A der Stirnseite des Ladezustandsanzeigers aus Figur 5;
- Figur 7 -: Rückansicht des Ladezustandsanzeigers aus Figur 5.
- Figur 8 -: Vorderansicht einer dritten Ausführungsform des Ladezustandsanzeiger für eine Kugel.

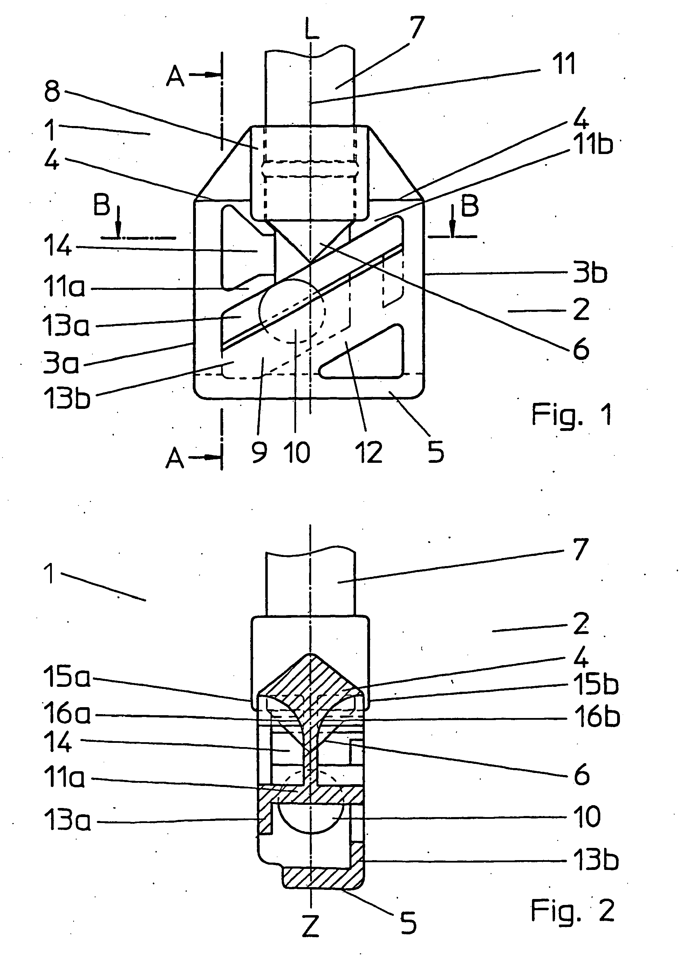

Die Figur 1 lässt eine erste Ausführungsform eines Ladezustandsanzeigers 1 von der Vorderseite erkennen. Der Ladezustandsanzeiger 1 hat einen Kugelkäfig 2, der von einem Elektrolyt (nicht dargestellt) in dem Akkumulator durchströmt ist. Der Kugelkäfig 2 hat eine vordere und hintere stirnseitige Begrenzung 3a, 3b sowie eine obere Begrenzungswand 4 und eine untere Begrenzungswand 5. Die obere Begrenzungswand 4 hat einen Durchbruch für ein zweites mit einer Spitze 6 versehenes Ende eines Sichtstabes 7. Die Spitze 6 des transparenten Sichtstabes 7 wird durch die konische Reflektionsfläche gebildet.

Der transparente Sichtstab 7 wird in einer Führung 8 am Durchbruch der oberen Begrenzungswand 4 ortsfest mit dem Kugelkäfig 2 verbunden.

In dem Kugelkäfig 2 ist weiterhin ein Kugelführungskanal 9 für wenigstens eine Kugel 10 ausgebildet. Der Kugelführungskanal 9 hat hierzu eine vom unteren Bereich de Kugelkäfig 2 bis zu Spitze 6 verlaufende erste obere Kanalbegrenzungswand 11 a und eine von der Spitze in Richtung Oberkante des Kugelkäfig 2 und Kugelführungskanals 9 verlaufende zweite obere Kanalbegrenzungswand 11 b sowie eine untere Kanalbegrenzungswand 12. Zur seitlichen Führung der mindestens einen Kugel 10 sind seitliche Begrenzungen 13a und 13b vorgesehen.

Wie aus der Figur 1 erkennbar ist, erstreckt sich der Kugelführungskanal 9 schräg zur Längsachse 11 des Sichtstabes. Auf diese Weise kann die Kugel 10 mit einem definierten spezifischen Gewicht in Abhängigkeit von dem Ladezustand des Elektrolyts in den Kugelführungskanal 9 schräg nach oben aufschwimmen, wenn der Ladezustand abnimmt.

In dem Kugelkäfig 2 ist weiterhin ein Glasblasensammelkanal 14 vorgesehen, der in einem Zwischenraum zwischen erster oberer Kanalbegrenzungswand 11a und Spitze 6 beginnt und sich mindestens von der Spitze 6 entgegengesetzt zur Erstreckungsrichtung des Kugelführungskanals 9 schräg nach oben zur oberen Begrenzungswand 4 erstreckt. Es ist erkennbar, dass der Gasblasensammelkanal 14 zudem nach unten erweitert ist, d.h. einen ausgehend von der Mündung zum Kugelführungssammelkanal 9 vergrößerten Raum bildet.

Die Figur 2 lässt den Ladezustandsanzeiger 1 aus Figur 1 im Schnitt A-A der vorderen Stirnseite erkennen. Es wird deutlich, dass der Gasblasensammelkanal 14 oben durch die obere Begrenzungswand 4 abgeschlossen wird. Im oberen Bereich des Gasblasensammelkanals 14 ist die obere Begrenzungswand 4 so ausgeformt, dass sie ausgehend von einer mit der Spitze 6 fluchtenden Zentralebene Z zu den Außenseiten 15a, 15b des Kugelkäfigs 2 in Richtung des oberen Bereichs des Kugelkäfigs 2 zulaufende Gasableitflächen 16a, 16b hat.

In dem dargestellten Ausführungsbeispiel sind die Gasableitflächen 16a, 16b durch relativ große Radien gebildet. Durch die von der Zentralebene Z nach außen zulaufenden Gasableitflächen 16a, 16b wird die Ableitung von Gasblasen erheblich verbessert.

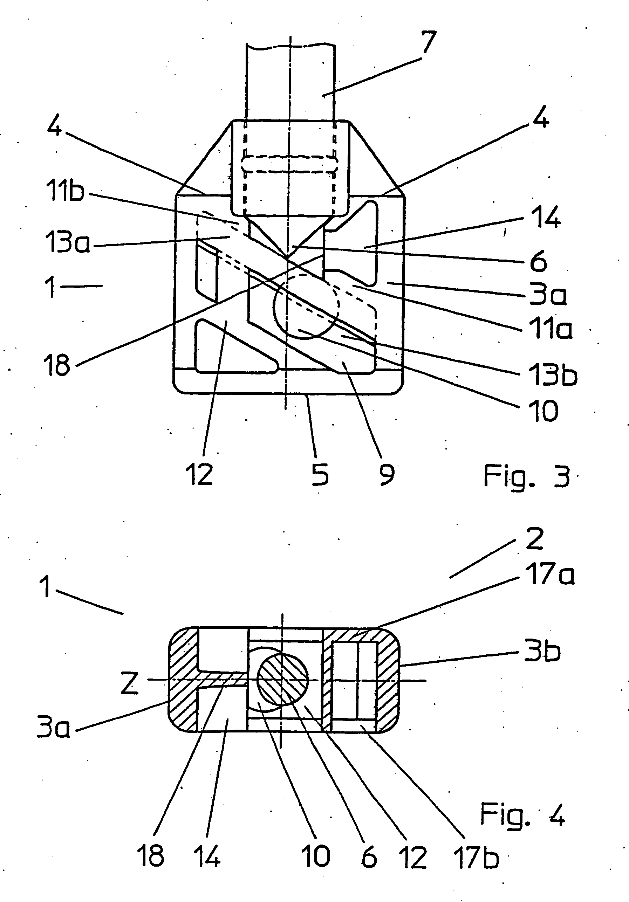

Die Figur 3 lässt das Ausführungsbeispiel des Ladezustandsanzeigers 1 aus der Figur 1 als Rückansicht erkennen. Nochmals wird der sich schräg erstreckende Kugelführungskanal 9 und der mit dem Kugelführungskanal 9 kommunizierende Gasblasensammelkanal 14 deutlich.

Die Figur 4 lässt den Ladezustandsanzeiger 1 aus der Figur 1 im Schnitt B-B im Teilschnitt erkennen. Es wird deutlich, dass eine Stützwand 18 des Kugelkäfigs 2 als schmaler Steg ausgebildet ist, um eine gute Durchflutung des Kugelkäfigs 2 zu ermöglichen.

Weiterhin ist erkennbar, dass die untere Kanalbegrenzungswand 12 vollflächig zwischen den seitlichen Begrenzungen 17a, 17b des Kugelkäfigs 2 ausgeführt ist. Optional kann aber auch die untere und obere Kanalbegrenzungswand 11, 12 ebenfalls als Steg ausgeführt werden, um das Abrollen der Kugel 10 im Kugelführungskanal 9 sowie die Durchflutung des Kugelkäfigs 2 zu verbessern.

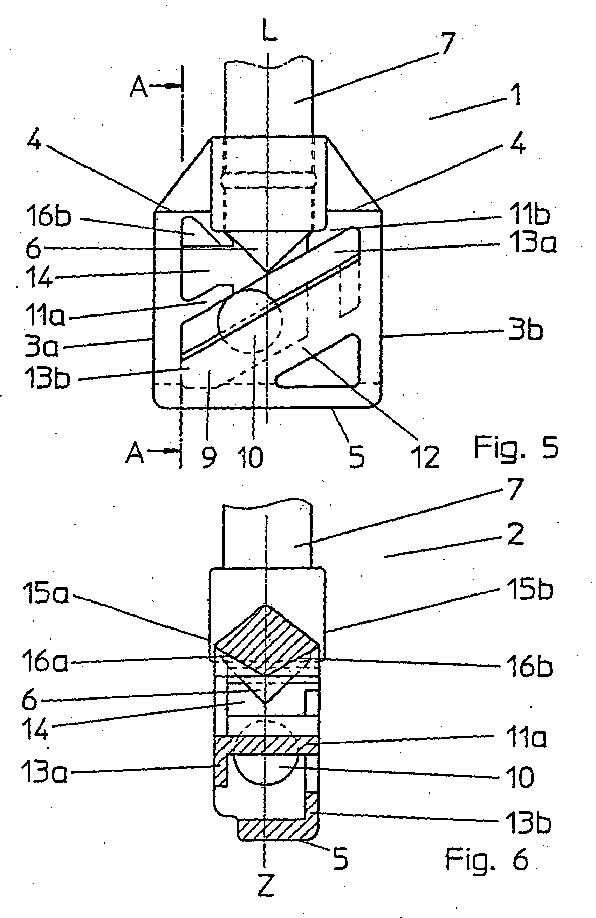

Die Figur 5 lässt eine zweite Ausführungsform des Ladezustandsanzeigers 1 von der Vorderseite erkennen. Im Unterschied zu dem Ladezustandsanzeiger 1 aus der Figur 1 gemäß der ersten Ausführungsform sind die Gasableitflächen 16a und 16b nicht radial vom Zentrum Z zur Außenseite 15a und 15b gekrümmt, sondern als geradlinige schräge Ebenen ausgebildet.

Die schräg von der Zentralebene Z zu den Außenseiten 15a, 15b des Kugelkäfigs 2 zulaufenden Gasableitflächen 16a, 16b sind in der Figur 6 erkennbar, die den Ladezustandsanzeiger 1 im Schnitt A-A auf die Stirnseite zeigt.

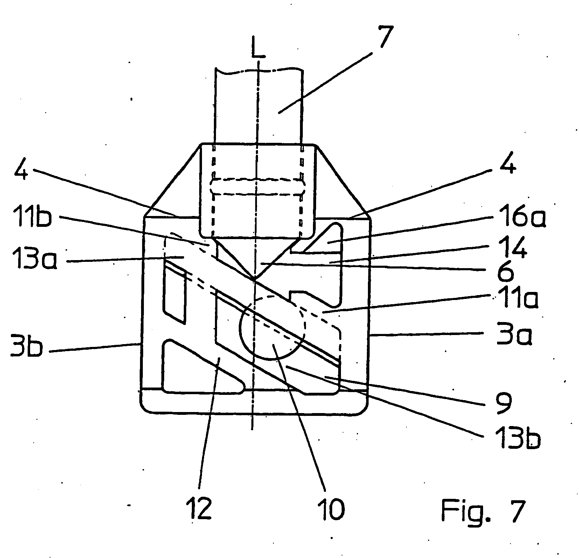

Die Figur 7 lässt den Ladezustandsanzeiger 1 aus der Figur 5 von der Rückseite erkennen. Auch hier wird deutlich, dass sich der schräg zur Längsachse L erstreckende Kugelführungskanal 9 in den Gasblasensammelkanal 14 mündet, der am oberen Ende Gasableitflächen 16a und 16b an der oberen Begrenzungswand 4 hat.

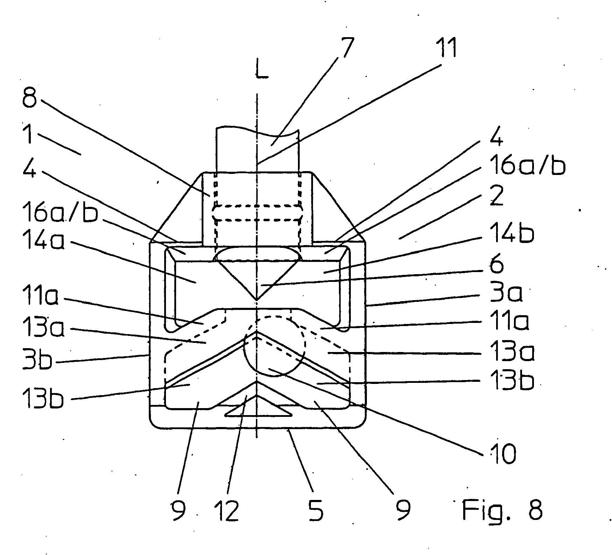

Figur 8 lässt eine dritte Ausführungsform des Ladezustandsanzeigers 1 für eine Kugel 10 in Vorderansicht erkennen. Es wird deutlich, dass der Kugelführungskanal 9 zwei sich entgegengesetzt zueinander diagonal erstreckende Abschnitte hat, die angrenzend an die Spitze 6 ineinander münden. Zur Ableitung von Gasblasen sind beidseits der Spitze 6 Gasblasensammelkanäle 14a und 14b vorgesehen, die unmittelbar angrenzend an die Spitze 6 ineinander münden.

## Patentansprüche

1. Ladezustandsanzeiger (1) für einen mit einem flüssigen Elektrolyten ausgestatteten Akkumulator, mit einem transparenten Sichtstab (7), der an einem ersten Ende eine Beobachtungsfläche und an einem zweiten Ende eine durch eine konische Reflektionsfläche gebildete Spitze (6) hat, und mit einem am zweiten Ende des Sichtstabes angebrachten, vom Elektrolyt durchströmbaren Kugelkäfig (2) mit stirnseitigen und unteren Begrenzungen (3a, 3b, 5) sowie einer mit einem Durchbruch für das zweite Ende des Sichtstabes (7) versehenen oberen Begrenzungswand (4) und mit mindestens einem sich schräg zur Längsachse (L) des Sichtstabes (7) in Richtung der oberen Begrenzungswand (4) erstreckenden Kugelführungskanal (9) mit oberen und unteren Kanalbegrenzungswänden (11a, 11b, 12) und seitlichen Kanalbegrenzungen (13) für wenigstens eine Kugel (10), die ein definiertes spezifisches Gewicht hat,
**dadurch gekennzeichnet, dass**
der Kugelkäfig (2) einen zwischen der vom unteren Bereich des Kugelkäfigs (2) zur Spitze (6) verlaufenden ersten oberen Kanalbegrenzungswand (11a) des Kugelführungskanals (9) und der Spitze (6) beginnenden Gasblasensammelkanal hat, der sich zumindest von der Spitze (6) entgegensetzt zum angrenzenden Kugelführungskanal (9) schräg nach oben zur oberen Begrenzungswand (4) erstreckt und im oberen Bereich des Gasblasensammelkanals (14) ausgehend von einer mit der Spitze (6) fluchtenden Zentralebene (Z) zu den Außenseiten (15a, 15b) des Kugelkäfigs (2) in Richtung des oberen Bereichs des Kugelkäfigs (2) zulaufende Gasableitflächen (16a, 16b) hat.

2. Ladezustandsanzeiger (1) nach Anspruch 1, **dadurch gekennzeichnet, dass** die Gasableitflächen (16a, 16b) radial nach außen von der Zentralebene (Z) zu den Außenseiten (15a, 15b) des Kugelkäfigs (2) verlaufen.

3. Ladezustandsanzeiger (1) nach Anspruch 1, **dadurch gekennzeichnet, dass** die Gasableitflächen(16a, 16b) schräg nach außen von der Zentralebene (Z) zu den Außenseiten (15a, 15b) des Kugelkäfigs (2) verlaufen.

4. Ladezustandsanzeiger (1) nach einem der Ansprüche 1 bis 3, **dadurch gekennzeichnet, dass** die Gasableitflächen (16a, 16b) eine aufgeraute Oberfläche haben.

5. Ladezustandsanzeiger (1) nach einem der Ansprüche 1 bis 4, **dadurch gekennzeichnet, dass** die an der Zentralebene (Z) in Richtung unterer Begrenzung (5) zulaufende obere Begrenzungswand (4) des Gasblasensammelkanals (14) in eine sich senkrecht in Richtung unterer Begrenzung (5) erstreckende Stützwand (18) übergeht, die eine zur Spitze (6) weisende Schmalseite hat.

6. Ladezustandsanzeiger (1) nach Anspruch 6, **dadurch gekennzeichnet, dass** die Stützwand (18) an dem ersten Teil des Kugelführungskanals (9) endet und integral mit dem ersten Teil des Kugelführungskanals (9) verbunden ist.

7. Ladezustandsanzeiger (1) nach einem der vorherigen Ansprüche, **dadurch gekennzeichnet, dass** eine sich von der Spitze (6) in Richtung der oberen Begrenzungswand (4) schräg nach oben erstreckende zweite obere Kanalbegrenzungswand (11b) des Kugelführungskanals (9) mit einem freien Zwischenraum an die konische Reflektionsfläche der Spitze (6) angrenzt und der Neigungswinkel der konischen Reflektionsfläche in Bezug auf die Längsachse (L) des Sichtstabes (7) kleiner als der Neigungswinkel des Kugelführungskanals (9) in Bezug auf die Längsachse (L) des Sichtstabes (7) ist.

8. Ladezustandsanzeiger (1) nach einem der vorhergehenden Ansprüche, **dadurch gekennzeichnet, dass** sich ein zur Aufnahme von zwei Kugeln (10) vorgesehener Kugelführungskanal (9) über die Spitze (6) des Sichtstabes (7) hinaus in Richtung der oberem Begrenzungswand (4) erstreckt.

9. Ladezustandsanzeiger (1) nach einem der Ansprüche 1 bis 6, **dadurch gekennzeichnet, dass** sich zwei Kugelführungskanäle (9) zur Aufnahme einer Kugel (10) entgegengesetzt diagonal zueinander erstrecken und angrenzend an der Spitze (6) ineinander münden.

## Claims

1. Charge indicator (1) for an accumulator provided with a liquid electrolyte, with a transparent inspection rod (7) which has at a first end an observation area and at a second end a tip (6) formed by a conical reflection area, and with a ball cage (2), which is attached at the second end of the inspection rod (7) and through which the electrolyte flows, with front-end and lower boundaries (3a, 3b, 5) and with an upper boundary wall (4) provided with an opening for the second end of the inspection rod (7) and with at least one ball guidance channel (9), extending obliquely to the longitudinal axis (L) of the inspection rod (7) in the direction of the upper boundary wall (4), with upper and lower channel boundary walls (11a, 11b, 12) and lateral channel boundaries (13) for at least one ball (10) which has a defined specific weight,
**characterized in that** the ball cage (2) has a gas bubble collection channel (14), beginning between the first upper channel boundary wall (11a), extending from the lower area of the ball cage (2) to the tip (6), of the ball guidance channel (9) and the tip (6), which extends obliquely toward the top to the upper boundary wall (4) oppositely to the adjoining ball guidance channel (9) at least from the tip (6) and has in the upper area of the gas bubble collection channel (14) gas diversion areas (16a, 16b) running to the outsides (15a, 15b) of the ball cage (2) in the direction of the upper area of the ball cage (2), starting from a central plane (Z) level with the tip (6).

2. Charge indicator (1) according to Claim 1, **characterized in that** the gas diversion areas (16a, 16b) extend radially outward from the central plane (Z) to the outsides (15a, 15b) of the ball cage (2).

3. Charge indicator (1) according to Claim 1, **characterized in that** the gas diversion areas (16a, 16b) extend obliquely outward from the central plane (Z) to the outsides (15a, 15b) of the ball cage (2).

4. Charge indicator (1) according to one of Claims 1 to 3, **characterized in that** the gas diversion areas (16a, 16b) have a roughened surface.

5. Charge indicator (1) according to one of Claims 1 to 4, **characterized in that** the upper boundary wall (4), running in the direction of the lower boundary (5) at the central plane (Z), of the gas bubble collection channel (14) changes into a support wall (18), extending perpendicularly in the direction of the lower boundary (5), which has a narrow side pointing toward the tip (6).

6. Charge indicator (1) according to Claim 6,
**characterized in that** the support wall (18) ends at the first part of the ball guidance channel (9) and is integrally joined to the first part of the ball guidance channel (9).

7. Charge indicator (1) according to one of the preceding claims, **characterized in that** a second upper channel boundary wall (11b), extending obliquely upward in the direction of the upper boundary wall (4) from the tip (6), of the ball guidance channel (9) adjoins the conical reflection area of the tip (6) with a free intermediate space and the angle of inclination of the conical reflection area with respect to the longitudinal axis (L) of the inspection rod (7) is smaller than the angle of inclination of the ball guidance channel (9) with respect to the longitudinal axis (L) of the inspection rod (7).

8. Charge indicator (1) according to one of the preceding claims, **characterized in that** a ball guidance channel (9), provided for accepting two balls (10), extends beyond the tip (6) of the inspection rod (7) in the direction of the upper boundary wall (4).

9. Charge indicator (1) according to one of Claims 1 to 6, **characterized in that** two ball guidance channels (9) for accepting a ball (10) extend oppositely diagonally to one another and open into one another adjoining the tip (6).

## Revendications

1. Indicateur d'état de charge (1) pour un accumulateur à électrolyte liquide comportant :
- une tige de visualisation (7), transparente, ayant à sa première extrémité, une surface d'observation et, à sa seconde extrémité, une pointe (6) formée par une surface conique de réflexion,
- une cage à bille (2), prévue à la seconde extrémité de la tige de visualisation, cette cage qui peut être traversée par l'électrolyte comporte des parois de limitation frontales et inférieures (3a, 3b, 5) ainsi qu'une paroi de limitation (4) supérieure munie d'un passage pour la seconde extrémité de la tige de visualisation (7), et au moins un canal de guidage de bille (9) qui s'étend en biais par rapport à l'axe longitudinal (L) de la tige de visualisation (7) en direction de la paroi supérieure de limitation (4) et qui a des parois de délimitation supérieures et inférieures (11a, 11b, 12) et des limitations latérales (13) pour au moins une bille (10) d'une densité définie,
**caractérisé en ce que**
la cage à bille (2) comporte un canal collecteur de bulles de gaz commençant entre la première paroi de limitation supérieure (11a) du canal de guidage de bille (9) allant de la zone inférieure de la cage à bille (2) vers la pointe (6) et jusqu'à la pointe (6), ce canal s'étendant au moins de la pointe (6) de façon opposée au canal de guidage de bille (9), adjacent, en biais vers le haut jusqu'à la paroi de limitation supérieure (4) et dans la zone supérieure du canal collecteur de bulles de gaz (14), partant d'un plan central (Z) aligné sur la pointe (6), il comporte des surfaces de déviation de gaz (16a, 16b) qui se rejoignent en direction de la zone supérieure de la cage à bille (2), vers les côtés extérieurs (15a, 15b) de la cage à bille (2).

2. Indicateur d'état de charge (1) selon la revendication 1,
**caractérisé en ce que**
les surfaces d'évacuation de gaz (16a, 16b) sont dirigées radicalement vers l'extérieur à partir du plan central (Z) vers les côtés extérieurs (15a, 15b) de la cage à bille (2).

3. Indicateur d'état de charge (1) selon la revendication 1,
**caractérisé en ce que**
les surfaces d'évacuation de gaz (16a, 16b) sont dirigées en biais vers l'extérieur à partir du plan central (Z) vers les côtés extérieurs (15a, 15b) de la cage à bille (2).

4. Indicateur d'état de charge (1) selon l'une des revendications 1 à 3,
**caractérisé en ce que**
les surfaces d'évacuation de gaz (16a, 16b) ont une surface supérieure rugueuse.

5. Indicateur d'état de charge (1) selon l'une des revendications 1 à 4,
**caractérisé en ce que**
la paroi de limitation supérieure (4) arrivant en direction de la limitation inférieure (5) au niveau du plan centrale (Z) du canal collecteur de bulles de gaz (14), rejoint une cloison d'appui (18) qui s'étend verticalement en direction de la limitation inférieure (5), cette cloison ayant un petit côté tourné vers la pointe (6).

6. Indicateur d'état de charge (1) selon la revendication 5,
**caractérisé en ce que**
la cloison d'appui (18) se termine au niveau de la première partie du canal de guidage de bille (9) et elle est reliée de manière intégrale à la première partie du canal de guidage de bille (9).

7. Indicateur d'état de charge (1) selon l'une des revendications précédentes,
**caractérisé en ce qu'**
une seconde paroi supérieure de limitation de canal (11b) pour le canal de guidage de bille (9) s'étend vers le haut en biais à partir de la pointe (6) en direction de la paroi de limitation supérieure (4) et rejoint avec un intervalle libre, la surface conique de réflexion de la pointe (6), et l'angle d'inclinaison de la surface de réflexion conique par rapport à l'axe longitudinal (L) de la tige de visualisation (7) et inférieur à l'angle
d'inclinaison du canal de guidage de bille (9) par rapport à l'axe longitudinal (L) de la tige de visualisation (7).

8. Indicateur d'état de charge (1) selon l'une des revendications précédentes,
**caractérisé en ce qu'**
un canal de guidage de bille (9) prévu pour recevoir deux billes (10) s'étend au-delà de la pointe (6) de la tige de visualisation (7) en direction de la paroi de limitation supérieure (4).

9. Indicateur d'état de charge (1) selon l'une des revendications 1 à 6,
**caractérisé en ce que**
deux canaux de guidage de bille (9) pour recevoir une bille (10) s'étendent sur une direction diagonale opposée l'une à l'autre et communiquent l'un avec l'autre de façon adjacente à la pointe (6).
